(19) Europäisches Patentamt
European Patent Office
Office européen des brevets

(11) EP 2 406 335 B1

(12) EUROPÄISCHE PATENTSCHRIFT

(45) Veröffentlichungstag und Bekanntmachung des Hinweises auf die Patenterteilung:
**14.12.2016 Patentblatt 2016/50**

(21) Anmeldenummer: **10707298.5**

(22) Anmeldetag: **10.03.2010**

(51) Int Cl.:
***C09D 17/00*** *(2006.01)*

(86) Internationale Anmeldenummer:
**PCT/EP2010/053014**

(87) Internationale Veröffentlichungsnummer:
**WO 2010/103031 (16.09.2010 Gazette 2010/37)**

# (54) FESTE PIGMENTZUBEREITUNGEN MIT PHOSPHORSÄURE- ODER PHOSPHONSÄUREESTERN ALS OBERFLÄCHENAKTIVE ADDITIVE

SOLID PIGMENT FORMULATIONS HAVING ESTERS OF PHOSPHORIC ACID OR PHOSPHONIC ACID AS SURFACE-ACTIVE ADDITIVES

PRÉPARATIONS PIGMENTAIRES SOLIDES RENFERMANT DES ESTERS D'ACIDE PHOSPHORIQUE OU D'ACIDE PHOSPHONIQUE EN TANT QU'ADDITIFS TENSIOACTIFS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.03.2009 EP 09154990**

(43) Veröffentlichungstag der Anmeldung:
**18.01.2012 Patentblatt 2012/03**

(73) Patentinhaber: **BASF SE**
**67056 Ludwigshafen am Rhein (DE)**

(72) Erfinder:
- **REISACHER, Hans Ulrich**
**67133 Maxdorf (DE)**
- **MAUTHE, Uwe**
**68239 Mannheim (DE)**

(56) Entgegenhaltungen:
**DE-A1- 10 227 657 DE-A1- 19 905 269**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft feste Pigmentzubereitungen, die Herstellung dieser Pigmentzubereitungen und ihre Verwendung zum Einfärben von hochmolekularen organischen und anorganischen Materialien.

Zur Pigmentierung von flüssigen Systemen, wie Anstrichmitteln, Lacken, Dispersions- und Druckfarben, werden üblicherweise Pigmentpräparationen eingesetzt, die Wasser, organisches Lösungsmittel oder Mischungen davon enthalten. Neben anionischen, kationischen, nichtionischen oder amphoteren Dispergiermitteln müssen diesen Pigmentpräparationen in der Regel weitere Hilfsmittel, wie Eintrocknungsverhinderer, Mittel zur Erhöhung der Gefrierbeständigkeit, Verdicker und Antihautmittel, zur Stabilisierung zugesetzt werden.

Es besteht Bedarf an neuen festen Pigmentzubereitungen, die in ihren koloristischen Eigenschaften und der Dispergierbarkeit den flüssigen Präparationen vergleichbar sind, jedoch nicht oder in verringertem Maße die genannten Zusätze erfordern und/oder leichter zu handhaben sind.

Nachteile der flüssigen Pigmentpräparationen sind deren begrenzte Lagerstabilität, die sich in einer starken Neigung zum Sedimentieren spez. der anorganischen Pigmente, einem starken Eindicken bzw. Gelieren der Präparationen, durch Hautbildung an der Oberfläche der Präparationen und durch eine zunehmende Verkeimung zeigt. Lagertemperaturen von 40° sollten deshalb nicht über einen längeren Zeitraum überschritten werden. Diese Effekte führen zu einer deutlich reduzierten Genauigkeit bei der Dosierung speziell von kleinen Mengen. Durch einfaches Trocknen der flüssigen Präparationen können jedoch keine festen Pigmentzubereitungen erhalten werden, die vergleichbare Anwendungseigenschaften aufweisen.

In den WO-A 03/64540, WO-A 03/66743, WO-A 04/00903, WO-A 04/29159, WO-A 04/46251, WO-A 04/50770 sowie WO-A 06/084849, WO-A 06/084861 und WO-A 00/47681 werden Pigmentzubereitungen beschrieben, die nichtionische oberflächenaktive Additive auf Basis von Polyethern und/oder anionische wasserlösliche oberflächenaktive Additive auf Basis von sauren Estern dieser Polyether, von Polymerisaten von ethylenisch ungesättigten Carbonsäuren und/oder von Polyurethanen sowie auch Füllstoffe enthalten und sich durch dieses Stir-in-Verhalten auszeichnen.

Die im Stand der Technik beschriebenen Pigmentzubereitungen weisen ausreichende Stir-in Eigenschaften für wässrige Farben und Lacke auf, sind jedoch nicht für den universellen Einsatz in allen wässrigen Lacken und Farben geeignet. Speziell in wässrigen Vinylacetatdispersionen weisen diese Produkte Schwächen auf. Darüber hinaus sind diese Produkte für die Anwendung in lösemittelhaltigen Farben wenig geeignet.

Eine Aufgabe der vorliegenden Erfindung besteht darin, feste Pigmentzubereitungen bereitzustellen, die sich durch insgesamt vorteilhafte Anwendungseigenschaften, insbesondere hohe Farbstärke und besonders leichte Dispergierbarkeit (Einrührbarkeit, "Stir-in"-Verhalten) in Anwendungsmedien verschiedenster Art und insbesondere den oben genannten Eigenschaften, auszeichnen.

Die Aufgabe wird gelöst durch eine feste Pigmentzubereitung enthaltend jeweils bezogen auf das Gesamtgewicht der Zubereitung

(A) mindestens 60 Gew.-% einer Pigmentkomponente enthaltend mindestens ein Pigment und/oder einen Füllstoff,

(B) 1 Gew.-% bis 29 Gew.-% einer oberflächenaktiven Additivkomponente auf Basis zumindest eines Phosphorsäure- oder Phosphonsäureesters, der sowohl anionisch als auch nichtionisch sein kann;

(C) 1 Gew.-% bis 29 Gew.-% mindestens eines nichtionischen oberflächenaktiven Additivs auf der Basis von Polyethern ausgewählt aus der Gruppe bestehend aus Propylenoxidhomopolymeren; Ethylenoxid/Propylenoxid-Blockcopolymeren, wobei die endständigen Blöcke aus Propylenoxideinheiten bestehen; Ethylenoxidaddukte an mono- oder bifunktionelle Amine oder Alkohole, wobei die Länge der Ethylenoxidkette derart gewählt ist, dass das Addukt wasserunlöslich ist; und Ethylenoxid/Propylenoxid-Blockcopolymeraddukte an mono- oder bifunktionelle Amine oder Alkohole, wobei der endständige Block aus Propylenoxideinheiten besteht;

(D) 0 Gew.-% bis 20 Gew.-% einer Additivkomponente enthaltend wenigstens ein weiteres Additiv, das verschieden von Additiven der Komponenten (B) und (C) ist,

wobei die Summe der Gewichtsanteile 100 Gew.-% nicht überschreitet.

Außerdem wird ein Verfahren zur Herstellung einer erfindungsgemäßen Zubereitung bereitgestellt, wobei zunächst die Komponente (A) in wässriger, zumindest einen Teil des Additivs (B) und gegebenenfalls (D) enthaltender Suspension entweder in Gegenwart des Additivs (C) einer Nasszerkleinerung unterworfen oder das Additiv (C) und gegebenenfalls (D) anschließend zugegeben wird, und die Suspension dann, gegebenenfalls nach Zugabe der restlichen Menge an Additiv (B) und gegebenenfalls (D), getrocknet wird.

Ein weiterer Gegenstand der vorliegenden Erfindung ist ein Verfahren zur Einfärbung von hochmolekularen organischen und anorganischen Materialen, wobei die erfindungsgemäße Zubereitung durch Einrühren oder Schütteln

in diese Materialien eingetragen wird. Bei den Materialien kann es sich insbesondere um Materialien handeln, die Lacke, Anstrichmittel, Druckfarben, Tinten oder Beschichtungssysteme sind, die als flüssige Phase Wasser, organische Lösungsmittel oder Mischungen von Wasser und organischen Lösungsmitteln enthalten.

Ein weiterer Gegenstand der vorliegenden Erfindung betrifft ein Verfahren zur Einfärbung von hochmolekularen organischen und anorganischen Materialien unter Verwendung von Farbmischsystemen, wobei eine erfindungsgemäße Zubereitung als Mischkomponenten eingesetzt wird.

Die erfindungsgemäßen Pigmentzubereitungen enthalten als wesentliche Bestandteile die Pigmentkomponente (A), das nichtionische oder anionische phosphorsäure- oder phosphonsäureester-haltige oberflächenaktive Additiv (B) und das nichtionische oberflächenaktive Additiv (C). Darüber hinaus können weitere Additive, die verschieden von denjenigen der Komponenten (B) und (C) sind, vorhanden sein, die die Komponente (D) bilden. Sämtliche Bestandteile addieren sich selbstverständlich zu 100 Gew.-% der Zubereitung.

Vorzugsweise beträgt die Summe der Gewichtsanteile der Komponenten (B) und (C) bezogen auf das Gesamtgewicht der Zubereitung 10 Gew.-% bis 30 Gew.-%, mehr bevorzugt 15 Gew.-% bis 25 Gew.-%.

Als Komponente (A) können in den erfindungsgemäßen Pigmentzubereitungen organische oder anorganische Pigmente enthalten sein. Selbstverständlich können die Pigmentzubereitungen auch Mischungen verschiedener organischer oder verschiedener anorganischer Pigmente oder Mischungen von organischen und anorganischen Pigmenten enthalten. Analoges gilt für Füllstoffe und Gemische aus Pigment(en) und Füllstoff(en).

Vorzugsweise enthält die Komponente (A) mindestens ein Pigment und gegebenenfalls mindestens einen Pigmentsynergisten. Ebenfalls bevorzugt enthält die Komponente (A) mindestens einen Füllstoff.

Die Pigmente liegen üblicherweise in feinteiliger Form vor. Die Pigmente haben dementsprechend üblicherweise mittlere Teilchengrößen von 0,1 bis 5 μm.

Bei den organischen Pigmenten handelt es sich üblicherweise um organische Bunt- und Schwarzpigmente. Anorganische Pigmente können ebenfalls Farbpigmente (Bunt-, Schwarz- und Weißpigmente) sowie Glanzpigmente und die üblicherweise als Füllstoffe eingesetzten anorganischen Pigmente sein.

Im Folgenden seien als Beispiele für geeignete organische Farbpigmente genannt:

| | |
|---|---|
| - Monoazopigmente: | C.I. Pigment Brown 25; C.I. Pigment Orange 5,13, 36, 38, 64 und 67; C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251; C.I. Pigment Yellow 1, 3, 62, 65, 73, 74, 97, 120, 151, 154, 168, 181, 183 und 191; C.I. Pigment Violet 32; |
| - Disazopigmente: | C.I. Pigment Orange 16, 34, 44 und 72; C.I. Pigment Yellow 12, 13, 14, 16, 17, 81, 83, 106, 113, 126, 127, 155, 170, 174, 176, 180 und 188; |
| - Disazokondensations- pigmente: | C.I. Pigment Yellow 93, 95 und 128; C.I. Pigment Red 144, 166, 214, 220, 221, 242 und 262; C.I. Pigment Brown 23 und 41; |
| - Anthanthronpigmente: | C.I. Pigment Red 168; |
| - Anthrachinonpigmente: | C.I. Pigment Yellow 147, 177 und 199; C.I. Pigment Violet 31; |
| - Anthrapyrimidin- pigmente: | C.I. Pigment Yellow 108; |
| - Chinacridonpigmente: | C.I. Pigment Orange 48 und 49; C.I. Pigment Red 122, 202, 206 und 209; C.I. Pigment Violet 19; |
| - Chinophthalonpigmente: | C.I. Pigment Yellow 138; |
| - Diketopyrrolopyrrol- pigmente: | C.I. Pigment Orange 71, 73 und 81; C.I. Pigment Red 254, 255, 264, 270 und 272; |
| - Dioxazinpigmente: | C.I. Pigment Violet 23 und 37; C.I. Pigment Blue 80; |
| - Flavanthronpigmente: | C.I. Pigment Yellow 24; |
| - Indanthronpigmente: | C.I. Pigment Blue 60 und 64; |
| - Isoindolinpigmente: | C.I. Pigment Orange 61 und 69; C.I. Pigment Red 260; C.I. Pigment Yellow 139 |

und 185;

- Isoindolinonpigmente: C.I. Pigment Yellow 109, 110 und 173;
- Isoviolanthronpigmente: C.I. Pigment Violet 31;
- Metallkomplexpigmente: C.I. Pigment Red 257; C.I. Pigment Yellow 117, 129, 150, 153 und 177; C.I. Pigment Green 8;
- Perinonpigmente: C.I. Pigment Orange 43; C.I. Pigment Red 194;
- Perylenpigmente: C.I. Pigment Black 31 und 32; C.I. Pigment Red 123, 149, 178, 179, 190 und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216;
- Pyrazolochinazolon- pigmente: C.I. Pigment Orange 67; C.I. Pigment Red 251;
- Thioindigopigmente: C.I. Pigment Red 88 und 181; C.I. Pigment Violet 38;
- Triarylcarbonium- pigmente: C.I. Pigment Blue 1, 61 und 62; C.I. Pigment Green 1; C.I. Pigment Red 81, 81:1 und 169; C.I. Pigment Violet 1, 2, 3 und 27;

- C.I. Pigment Black 1 (Anilinschwarz);
- C.I. Pigment Yellow 101 (Aldazingelb);
- C.I. Pigment Brown 22.

Geeignete anorganische Farbpigmente sind z.B.:

- Weißpigmente: Titandioxid (C.I. Pigment White 6), Zinkweiß, Farbenzink- oxid; Zinksulfid, Lithopone;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7); Chromeisenoxid- schwarz (P.Br. 29);
- Buntpigmente: Chromoxid, Chromoxidhydratgrün; Chromgrün (C.I. Pig- ment Green 48); Cobaltgrün (C.I. Pigment Green 50); Ultramaringrün;
  Kobaltblau (C.I. Pigment Blue 28 und 36; C.I. Pigment Blue 72); Ultramarinblau; Manganblau; Ultramarinviolett; Kobalt- und Manganviolett;
  Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot;
  Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
  Cersulfid (C.I. Pigment Orange 75); Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Bei den Glanzpigmenten handelt es sich um einphasig oder mehrphasig aufgebaute plättchenförmige Pigmente,

deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Die nachfolgend aufgeführten Pigmentderivate eignen sich besonders als Pigmentsynergisten, die mit einem oder mehreren Pigmenten, insbesondere organischen Pigmenten, die Pigmentkomponente (A) bilden können.

In einer bevorzugten Ausführungsform enthält die Komponente (A) neben mindestens einem Pigment weiterhin mindestens einen Pigmentsynergisten. Sofern dieser vorhanden ist, beträgt dessen Anteil am Gesamtgewicht der erfindungsgemäßen Zubereitung vorzugsweise 0,01 Gew.-% bis 5 Gew.%, weiter bevorzugt 0,1 Gew.-% bis 4 Gew.-%.

Es handelt sich hierbei vorzugsweise um Pigmentderivate der Formel I

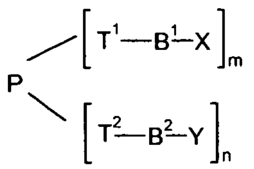

I

in der die Variablen folgende Bedeutung haben:

| | |
|---|---|
| P | den Rest des Grundkörpers eines organischen Pigments ; |
| $T^1$, $T^2$ | unabhängig voneinander eine chemische Bindung, $-CONR^1-$ oder $-SO_2NR^{1-}$; |
| $B^1$, $B^2$ | unabhängig voneinander eine chemische Bindung, C1-C8-Alkylen oder Phenylen; |
| X, Y | unabhängig voneinander gleiche oder verschiedene Gruppen $-SO_3- Ka^+$ oder $-COO- Ka^+$; |
| m, n | eine rationale Zahl von 0 bis 3, wobei $1 \le m+n \le 4$ ist; |
| $Ka^+$ | $H^+$, $Li^+$, $Na^+$, $K^+$, $N^+R^2R^3R^4R^5$ oder ein Gemisch dieser Kationen; |
| $R^1$ | Wasserstoff; $C_1$-$C_4$-Alkyl; Phenyl oder Naphthyl, das jeweils durch $C_1$-$C_{18}$-Alkyl substituiert sein kann; |
| $R^2$ , $R^3$, $R^4$, $R^5$ | unabhängig voneinander Wasserstoff ; $C_1$-$C_{30}$-Alkyl; $C_3$-$C_{30}$-Alkenyl; $C_5$-$C_6$-Cycloalkyl, das durch $C_1$-$C_{24}$-Alkyl substituiert sein kann; Phenyl oder Naphthyl, das jeweils durch $C_1$-$C_{24}$-Alkyl oder $C_2$-$C_{24}$-Alkenyl substituiert sein kann; einen Rest der Formel $-[CHR_6-CHR,-O]_x-R^8$, bei dem die Wiederholungseinheiten - $[CHR_6-CHR_7-O]$ für x > 1 variieren können; |
| $R^6$, $R^7$, $R^8$ | unabhängig voneinander Wasserstoff oder $C_1$-$C_6$-Alkyl; |
| x | eine ganze Zahl $\ge 1$. |

Die Pigmentderivate I basieren auf dem Grundkörper P eines organischen Pigments, der durch Sulfonsäure- und/oder Carbonsäuregruppen funktionalisiert ist, die entweder direkt oder über Brückenglieder an den Grundkörper gebunden sind. Unter dem Begriff Grundkörper sollen dabei die Pigmente selbst sowie ihre Vorläufer verstanden werden. Pigmentvorläufer kommen insbesondere bei polycyclischen Pigmenten in Betracht. Sie weisen das Ringgerüst des Pigments auf, das Substitutionsmuster des Pigments liegt aber nicht vollständig vor und/oder Funktionalisierungen fehlen. Als Beispiel seien Perylen-3,4-dicarbonsäureimide als Vorläufer der auf Perylen-3,4,9,10-tetracarbonsäuren und deren Diimiden basierenden Perylenpigmente genannt.

Grundsätzlich sind für die Pigmentderivate I die Grundkörper von Pigmenten aus der Reihe der Anthrachinon-, Chinacridon-, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron-, Pyrazolochinazolon-und Thioindigopigmente bevorzugt. Aufgrund ihrer breiten Einsatzbarkeit sind dabei Pigmentgrundkörper aus der Reihe der Chinophthalon-, Perylen- und Phthalocyaninpigmente besonders bevorzugt. Unter diesen sind wiederum die Pigmentgrundkörper aus der Reihe der Chinophthalon-und Phthalocyaninpigmente ganz besonders bevorzugt. Die chinophthalonbasierenden Pigmentderivate I (insbesondere das im folgenden näher bezeichnete Pigmentderivat Ia) eignen sich besonders für die Kombination mit Gelb-, O-range- und Rotpigmenten, die phthalocyaninbasierenden Pigmentderivate I (vor allem das im folgenden ebenfalls näher bezeichnete Pigmentderivat Ib) sind insbesondere für die Kombination mit Blau-, Grün-, Violett- und Schwarzpigmenten geeignet.

Vorzugsweise enthalten die Pigmentderivate I die Sulfonsäure- und/oder Carbonsäuregruppen X bzw. Y direkt an den Pigmentgrundkörper P gebunden, d. h. $T^1$ und $B^1$ sowie $T^2$ und $B^2$ bedeuten alle bevorzugt eine chemische Bindung.

$T^1$ und $T^2$ können jedoch auch Brückenglieder der Formel-$CONR^1$-oder-$SO_2NR^1$ - ($R^1$: Wasserstoff; $C_1$-$C_4$-Alkyl; Naphthyl oder insbesondere Phenyl, das jeweils durch $C_1$-$C_{18}$-Alkyl substituiert sein kann, vorzugsweise aber unsubstituiert ist) bedeuten. Beispiele für besonders geeignete Brückenglieder $T^1$ und $T^2$ sind -CONH-, $SO_2NH$-, -CON ($CH_3$)- und -$SO_2N(CH_3)$-.

Ebenso können $B^1$ und $B^2$ unverzweigte oder verzweigte $C_1$-$C_8$-Alkylenreste oder Phenylenreste bedeuten. Beispielhaft seien genannt: Methylen, 1,1-und 1,2-Ethylen, 1,1-, 1, 2- und 1,3-Propylen und 1,4-, 1,3- und 1,2-Phenylen.

Geeignete Kombinationen der Brückenglieder T und B sind z. B. -CONH-$CH_2$-, -CON ($CH_3$)-$CH_2$-, -CONH-$C_2H_4$-, -CONH-CH($CH_3$)-, -$S0_2$NH-$CH_2$-, -$S0_2N(CH_3)$-$CH_2$-,-$SO_2$NH-$C_2H_4$-, - $SO_2$NH-CH ($CH_3$)-, -CONH-1, 4-$C_6H_4$-und-$SO_2$NH-1, 4-$C_6H_4$-.

Die Sulfonsäure- und/oder Carbonsäuregruppen X bzw. Y können als freie Säure oder als Salz ($Ka^+$ : $Li^+$, $Na^+$, $K^+$ oder $N^+R^2R^3R^4R^5$) vorliegen.

Die Ammoniumsalze können dabei von unsubstituierten Ammoniumionen gebildet werden, vorzugsweise ist jedoch mindestens einer der Reste $R^2$, $R^3$, $R^4$ und $R^5$ von Wasserstoff verschieden.

Geeignete aliphatische Reste $R^2$, $R^3$, $R^4$ und $R^5$ sind dabei $C_1$-$C_{30}$-Alkyl-und $C_3$-$C_{30}$-Alkenylreste, die unverzweigt oder verzweigt sein können, und $C_5$-$C_6$-Cycloalkylreste, die durch $C_1$-$C_{24}$-Alkyl, vorzugsweise $C_1$-$C_{18}$-Alkyl, substituiert sein können. Als aromatische Reste eignen sich Phenyl und Naphthyl, die jeweils durch $C_1$-$C_{24}$-Alkyl oder durch $C_2$-$C_{24}$-Alkenyl, insbesondere $C_1$-$C_{18}$-Alkyl oder $C_2$-$C_{18}$-Alkenyl, substituiert sein können. Weiterhin können die Reste $R^2$, $R^3$, $R^4$ und $R^5$ auch Polyalkylenoxyreste der Formel -$[CHR^6$-$CHR^7$-$O]_x$-$R^8$ ($R^6$, $R^7$ und $R^8$: unabhängig voneinander Wasserstoff, $C_1$-$C_6$-Alkyl; $x \geq 1$) sein. Wenn $x > 1$ ist, kann es sich um homopolymere Reste, also z. B. reine Polyethylenoxy- oder reine Polypropylenoxyreste, oder um copolymere, die verschiedenen Alkylenoxyeinheiten insbesondere blockweise oder auch statistisch enthaltende Reste, z. B. Polyethylenoxy/Polypropylenoxyreste, handeln.

Bevorzugt sind die aromatischen und besonders bevorzugt die nichtcyclischen aliphatischen Reste $R^2$, $R^3$, $R^4$ und $R^5$.

Ganz besonders geeignete Ammoniumsalze sind Mono-$C_8$-$C_{30}$-alkyl- oder -alkenyl-ammoniumsalze, z. B. Lauryl-, Stearyl-, Oleyl- und Talgfettalkylammoniumsalze, sowie quaternierte Ammoniumsalze, die insgesamt 24 bis 42 C-Atome enthalten, wobei mindestens ein, bevorzugt zwei der Alkyl- und/oder Alkenylreste mindestens 8, vorzugsweise 12, besonders bevorzugt 12 bis 20 C-Atome aufweisen, z. B. Dimethyldido decyl-, Dimethyldioleyl- und Dimethyldistearylammoniumsalze.

Vorzugsweise liegen die Sulfonsäure- und/oder Carbonsäuregruppen X bzw. Y in den Pigmentderivaten I nicht in freier Form vor. Wenn sie nicht schon von vornherein zum Salz umgesetzt sind, erfolgt die Salzbildung, insbesondere die Bildung des Natriumsalzes, in der Regel bei der Herstellung der Pigmentzusammensetzung, die in diesem Fall vorzugsweise einen Neutralisationsschritt umfasst. Hat keine oder nur unvollständige Salzbildung stattgefunden, so können die Säuregruppen bei Einsatz eines nichtionischen oberflächenaktiven Additivs, das ein basisches Zentrum, z. B. ein Stickstoffatom, aufweist, selbstverständlich auch mit diesem Additiv unter Salzbildung reagieren.

Häufig werden also Mischungen verschiedener Salze vorliegen. Wenn dies der Fall ist, sollten die bevorzugten Natrium- und/oder Ammoniumsalze (insbesondere die oben explizit genannten Ammoniumsalze) zumindest einen hohen Anteil an diesen Mischungen ausmachen.

Die Pigmentderivate I können 1 bis 4 Säuregruppen enthalten. Abhängig vom Pigmentgrundkörper P, z. B. bei einem Phthalocyaninrest P, können die Pigmentderivate I statistische Mischungen verschieden stark substituierter Moleküle darstellen, so dass der Mittelwert der Summe m + n eine gebrochene Zahl sein kann.

Vorzugsweise enthalten die Pigmentderivate I ausschließlich Sulfonsäuregruppen. Dabei hat sich ein Substitutionsgrad (m + n) von 1 bis 3, vor allem 1 bis 2, als besonders vorteilhaft erwiesen. Liegen die Sulfonsäuregruppen in Form eines Ammoniumsalzes (m) und gegebenen- falls Natriumsalzes oder als freie Säure (n) vor, so beträgt m vorzugsweise 1 bis 1,8 und n 0 bis 0,2.

Als Beispiele für besonders geeignete Pigmentderivate I seien genannt:

Chinophthalonsutfonsäuren der Formel Ia

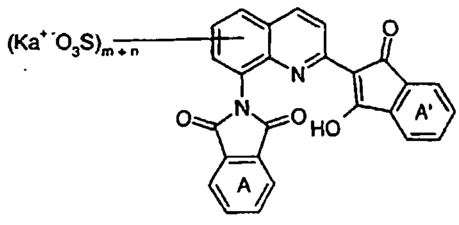

Ia

Kupferphthalocyaninsulfonsäuren der Formel Ib

$[CuPc] (SO_3Ka^+)_{m+n}$ Ib

Perylensulfonsäuren der Formel Ic

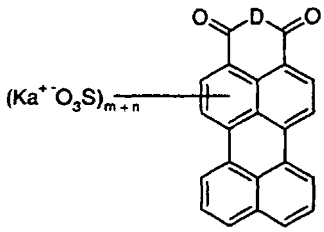

Ic

Die Variablen $Ka^+$ und m + n haben dabei die eingangs definierte Bedeutung, wobei Ka vorzugsweise für $Na^+$ oder $N^+R^2R^3R^4R^5$ (insbesondere mit den oben ausgeführten bevorzugten Kombinationen der Reste $R^2$ bis $R^5$) steht. Die Summe m + n bedeutet bei den Verbindungen Ia und Ic insbesondere 1, wobei die Sulfonsäuregruppen bei den Verbindungen Ia bevorzugt in 6- Position und bei den Verbindungen Ic bevorzugt in 9-Position steht.

Die Ringe A und A' in Formel Ia können gleich oder verschieden sein und durch jeweils 1 bis 4 Chlor- und/oder Fluoratome substituiert sein. Vorzugsweise tragen beide Ringe 4 Chloratome.

Die Variable D steht für -O- oder $-NR^9-$, wobei $R^9$ Wasserstoff, $C_1$-$C_4$-Alkyl oder Phenyl, das durch $C_1$-$C_4$-Alkyl, $C_1$-$C_4$-Alkoxy und/oder Phenylazo substituiert sein kann, bedeutet. Bevorzugt steht $R^9$ für Wasserstoff, Methyl, 4-Ethoxyphenyl, 3,5-Dimethylphenyl oder 4-Phenylazophenyl.

Ganz besonders bevorzugte Pigmentderivate Ia und Ib sind solche mit den als bevorzugt angegebenen Bedeutungen der Variablen, wobei die Pigmentderivate Ia und Ib sowohl als Natrium- als auch als Ammoniumsalze vorliegen können.

Als weiter organische Pigmentgrundkörper kommen Azo, Diketopyrrolopyrrol, Metallkomplexe, Chinacridone, Isoindolin und Isoindolinone in Frage.

Die Pigmentderivate I sind bekannt und können nach bekannten Verfahren hergestellt werden.

Die Komponente (B) enthält 1 Gew.-% bis 29 Gew.-% einer oberflächenaktiven Additivkomponente auf Basis zumindest eines Phosphorsäure- oder Phosphonsäureesters, der sowohl anionisch als auch nicht-ionisch sein kann.

Hierbei ist es besonders bevorzugt, wenn die Komponente (B) mindestens einen Phosphorsäureester enthält.

Anionische/nichtionische oberflächenaktive Additive auf der Basis von Phosphorsäure- oder Phosphonsäureestern resultieren insbesondere aus den Umsetzungsprodukten von Polyethern mit Phosphorsäure, Phosphorpentoxid oder Phosphonsäure. Hierbei werden die Polyether in die entsprechenden Phosphorsäuremonoester, -diester oder -triester bzw. entsprechender Phosphonsäureester überführt. Die anionischen Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden. Als Basis für die Polyether dienen insbesondere Polyalkylenglykole, wie Polyethylen (EO)- oder Polypropylen (PO)-Glykole oder EO/PO-Blockcopolymeren mit üblicherweise einem Molekulargewicht von bis zu 10.000 g/mol.

Bevorzugte Phosphate und Phosphonate leiten sich vor allem von alkoxylierten, insbesondere ethoxylierten, bzw. ethoxylierten/propoxylierten, vor allem mehrfach alkoxylierten, insbesondere mehrfach ethoxylierten, mehrfach propoxylierten oder EO/PO Addukten von Fett- und Oxoalkoholen, Alkylphenolen, Fettaminen, Fettsäuren und Harzsäuren und Aminen, auch mehrwertigen Aminen, wie Hexamethylendiamin ab. Übliche Molekulargewichte betragen bis zu 5000 g/mol, bevorzugt bis zu 2000 g/mol. Hierbei werden bevorzugt die freien Hydroxylgruppen der Alkylenglykole nach Alkoxylierung an die oben genannten Alkohole, Amine und Säuren in die Phosphorester bzw. Phosphonsäureester umgewandelt.

Weiterhin können auch Alkohole und aromatische Alkohole, insbesondere Phenole direkt zu Phosphorsäure-

oder Phophonsäureester umgesetzt werden. Weitere bevorzugte Phosphate und Phosphonate leiten sich daher von Alkanolen, Phenolen und Alkylphenolen, insbesondere Fett- und Oxoalkoholen und Alkylphenolen ab, wobei sich üblicherweise Molekulargewichte von weniger als < 1000 g/mol ergeben. Beispiele sind Mono-, Di-, Trialkylphosphorsäureester wie Tributylphosphat oder die entsprechenden Phosphonate; Di-, Tri-Phenylphosphate, Di-, Tri-Kresolphosphate oder Alkylarylphosphorsäureester.

Die Phosphorsäure- oder Phosphonsäureester können allgemein gleiche oder verschiedene Reste aufweisen.

Derartige anionische oberflächenaktive Additive sind bekannt und im Handel z.B. unter den Namen Crodafos® (Croda), Rhodafac® (Rhodia), Maphos® (BASF), Texapon® (Cognis), Empicol® (Albright & Wilson), Matexil® (ICI), Soprophor® (Rhodia) und Lutensit® (BASF), Strodex® (Dexter), Hordaphos®, Hostaphat® (Clariant) erhältlich.

Darüber hinaus können auch Lecithine Bestandteil der Komponenten (B). Ein besonders bevorzugtes Lecithin ist Sojalecithin. Lecithine sind Phospholipide, die sich aus Fettsäuren, Glycerin, Phosphorsäure und Cholin zusammensetzen. Hierbei können die Fettsäuren gesättigt oder ungesättigt sein.

Die Komponente (C) enthält mindestens ein oberflächenaktives Additiv ausgewählt aus der Gruppe bestehend aus Propylenoxidhomopolymeren; Ethylenoxid/Propylenoxid-Blockcopolymeren, wobei die endständigen Blöcke aus Propylenoxideinheiten bestehen; Ethylenoxidaddukte an mono- oder bifunktionelle Amine oder Alkohole, wobei die Länge der Ethylenoxidkette derart gewählt ist, dass das Addukt wasserunlöslich ist; und Ethylenoxid/Propylenoxid-Blockcopolymeraddukte an mono- oder bifunktionelle Amine oder Alkohole, wobei der endständige Block aus Propylenoxideinheiten besteht.

Bevorzugt enthält die Komponente (C) mindestens eines der Additive ausgewählt aus der Gruppe bestehend aus Ethylenoxid/Propylenoxid-Blockcopolymeren, wobei die endständigen Blöcke aus Propylenoxideinheiten bestehen; Ethylenoxid/Propylenoxid-Blockcopolymeraddukte an bifunktionelle Amine, wobei der endständige Block aus Propylenoxideinheiten besteht.

Sofern die Komponente (C) ein Propylenoxidhomopolymer enthält, weist dieses vorzugsweise ein Molekulargewicht von 400 g/mol bis 10000 g/mol auf.

Sofern die Komponente (C) ein Ethylenoxid/Propylenoxid-Blockcopolymer mit endständigen Blöcken aus Propylenoxideinheiten enthält, ist bevorzugt, dass diese Blöcke die Abfolge PO-EO-PO oder PO-EO-PO-EO-PO, mehr bevorzugt PO-EO-PO, aufweisen. Vorzugsweise liegt das Molekulargewicht eines solchen Copolymers im Bereich von 1000 g/mol bis 10000 g/mol, mehr bevorzugt 1000 g/mol bis 5000 g/mol. Die Anzahl der Propylenoxideinheiten im Copolymer beträgt vorzugsweise 10 bis 100 Einheiten, die Anzahl der Ethylenoxideinheiten liegt vorzugsweise im Bereich von 1 bis 100 Einheiten, weiter bevorzugt 1 bis 75 Einheiten.

Sofern die Komponente (C) ein Ethylenoxidaddukt an mono- oder bifunktionelle Amine oder Alkohole mit einer Länge der Ethylenoxidkette, die derart gewählt ist, dass das Addukt wasserunlöslich ist, enthält, ist bevorzugt, dass die Anzahl der Ethylenoxideinheiten kleiner 10 beträgt. Bei dem monofunktionellen Alkohol bzw. monofunktionellen Amin handelt es sich vorzugsweise um ein verzweigtes oder unverzweigtes Alkanol bzw. Amin mit 10 bis 20 Kohlenstoffatomen, wobei das Alkanol bzw. Amin vorzugsweise ein primärer Alkohol bzw. primäres Amin ist. Bei dem bifunktionellen Alkohol handelt es sich vorzugsweise um Glykol, Propan-1,2-diol oder Propan-1,3-diol. Bei dem bifunktionellen Amin handelt es sich vorzugsweise um Ethylendiamin, Propylen-1,3-diamin, oder Butylen-1,4-diamin.

Sofern die Komponente (C) ein Ethylenoxid/Propylenoxid-Blockcopolymeraddukt an mono- oder bifunktionelle Amine oder Alkohole mit endständigem Block aus Propylenoxideinheiten enthält, weist dieses vorzugsweise nur einen Propylen- und einen Ethylenoxidblock auf. Bei dem monofunktionellen Alkohol bzw. monofunktionellen Amin handelt es sich vorzugsweise um ein verzweigtes oder unverzweigtes Alkanol bzw. Amin mit 10 bis 20 Kohlenstoffatomen, wobei das Alkanol bzw. Amin vorzugsweise ein primärer Alkohol bzw. primäres Amin ist. Bei dem bifunktionellen Alkohol handelt es sich vorzugsweise um Glykol, Propan-1,2-diol oder Propan-1,3-diol. Bei dem bifunktionellen Amin handelt es sich vorzugsweise um Ethylendiamin, Propylen-1,3-diamin, oder Butylen-1,4-diamin. Bei den Addukten mit bifunktionellen Aminen oder Alkoholen beträgt das Molekulargewicht des Adduktes vorzugsweise 1000 g/mol bis 40000 g/mol, weiter bevorzugt 1000 g/mol bis 30000 g/mol. Die Anzahl der Propylenoxideinheiten im Copolymer beträgt vorzugsweise 10 bis 100 Einheiten, die Anzahl der Ethylenoxideinheiten liegt vorzugsweise im Bereich von 1 bis 100 Einheiten, weiter bevorzugt 1 bis 75 Einheiten.

In der Regel wird die Löslichkeit in Lösemitteln durch eine Verringerung der Wasserlöslichkeit erreicht. Wasserunlösliche Additive lassen sich somit in Anwesenheit eines wasserlöslichen Additivs in Wasser dispergieren

Die Wasserlöslichkeit/Hydrophobisierung kann somit dadurch beispielsweise gesteuert werden, dass hydrophobe Propylenoxidblöcke end- oder mittelständig sind oder die Anzahl der Ethylenoxideinheiten bei Addukten verringert wird, um ihre Löslichkeit in Wasser zu verringern.

Im Einzelnen können die Verbindungen oder Komponenten (C) und die nachfolgend beschriebenen (D1) vom Prinzip her gleich aufgebaut sein, wobei ihre Unterscheidung aufgrund der Wasserlöslichkeit bzw. Endständigkeit von PO Gruppen beispielsweise durch die oben genannten Maßnahmen erreicht werden kann.

In der Regel sind Produkte mit weniger als 10, vorzugsweise weniger als 8, vorzugsweise weniger 6 Ethylenoxideinheiten wasserunlöslich. Endständige Propylenoxideinheiten verringern die Wasserlöslichkeiten bzw. stellen hydrophobere Endgruppen dar. Wasserlöslichkeiten sind beispielsweise in den entsprechenden Technischen Informationen der einzelnen Produkte zu entnehmen.

Bei den Polyethern handelt es um EO- und/oder PO-Polyalkylenoxide oder entsprechende Umsetzungsprodukte mit Alkoholen und Aminen. Erfindungsgemäß soll dabei unter dem Begriff Alkylenoxid bzw. EO, PO auch arylsubstiutiertes Alkylenoxid, insbesondere phenylsubstituiertes Ethylenoxid, verstanden werden. Vorzugsweise soll der Begriff Alkylenoxid bzw. EO, PO keine solche Substituenten aufweisen.

Bei den Addukten an mono- oder bifunktionelle Alkohole oder Amine handelt es sich vorzugsweise um die oben genannten Alkohole und Amine.

Allgemein können jedoch auch folgende Alkohole oder Amine eingesetzt werden.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol, 2-Hexyldecanol, Heptadecanol, Octadecanol, 2-Heptylundecanol, 2-Octyldecanol, 2-Nonyltridecanol, 2-Decyltetradecanol, Oleylalkohol und 9-Octadecenol sowie auch Mischungen dieser Alkohole wie $C_8/C_{10}$-, $C_{13}/C_{15}$- und $C_{16}/C_{18}$-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte $M_n$ von 200 bis 5000, vor allem von 400 bis 2000 auf.

Als Beispiele für aromatische Alkohole seien neben $\alpha$- und $\beta$-Naphthol und deren $C_1$-$C_4$-Alkylderivaten insbesondere Phenol und seine $C_1$-$C_{12}$-Alkylderivate, wie Hexylphenol, Heptylphenol, Octylphenol, Nonylphenol, Isononylphenol, Undecylphenol, Dodecylphenol, Di- und Tributylphenol und Dinonylphenol genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als bifunktionelle Amine können beispielsweise zweiwertige Amine eingesetzt werden, die insbesondere der Formel $H_2N$-$(R$-$NR^1)_2$-$H$ (R: $C_2$-$C_6$-Alkylen; $R^1$: Wasserstoff oder $C_1$-$C_6$-Alkyl) entsprechen. Im Einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin.

Als bifunktionelle Alkohole sind beispielhaft $C_2$-$C_6$-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol genannt.

Die Alkylenoxid-Blockcopolymere sind bekannt und im Handel z.B. unter den Namen Tetronic® (wasserlöslich und wasserunlöslich), Pluronic® (wasserlöslich und wasserunlöslich) (BASF) und Synperonic® (Uniqema) erhältlich.

Die erfindungsgemäßen Pigmentzubereitungen enthalten mindestens 60 Gew.-%, bevorzugt 60 bis 90 Gew.-%, mehr bevorzugt 70 bis 85 Gew.-%, der Komponente (A), 1 bis 29 Gew.-%, vorzugsweise 2,5 bis 25 Gew.-%, weiter bevorzugt 5 bis 20 Gew.-% der Komponente (B) und 1 bis 29 Gew.-%, bevorzugt 1 bis 25 Gew.-%, insbesondere 1 bis 20 Gew.-%, der Komponente (C), jeweils bezogen auf das Gesamtgewicht der Zubereitung.

Die erfindungsgemäße Zubereitung kann darüber hinaus weitere Bestandteile (D) enthalten. Diese weisen einen Anteil von 0 Gew.-% bis 20 Gew.-% bezogen auf das Gesamtgewicht der Zubereitung. Diese sind also vorhanden oder nicht vorhanden. Sofern diese vorhanden sind, beträgt deren Anteil vorzugsweise 0,1 Gew.-% bis 20 Gew.-%, mehr bevorzugt 0,5 Gew.-% bis 17,5 Gew.-% und weiter mehr bevorzugt 1 Gew.-% bis 15 Gew.-%.

Sofern die erfindungsgemäße feste Pigmentzubereitung weitere Stoffe enthält, die nicht den Komponenten (A), (B), (C) zugeordnet werden können, sind diese Bestandteile der Komponente (D) zuzuordnen. Diese Stoffe können verschiedenster chemischer Natur sein.

Bevorzugt enthält die Komponente (D) als Komponente (D1) 1 Gew.-% bis 20 Gew.-% bezogen auf das Gesamtgewicht der Zubereitung mindestens eines nichtionischen wasserlöslichen oberflächenaktiven Additivs auf der Basis von Polyethern ausgewählt aus der Gruppe bestehend aus Ethylenoxidhomopolymeren; Ethylenoxid/Propylenoxid-Blockcopolymeren, wobei die endständigen Blöcke aus Ethylenoxideinheiten bestehen; Ethylenoxidaddukte an mono- oder bifunktionelle Amine oder Alkohole, wobei die Länge der Ethylenoxidkette derart gewählt ist, dass das Addukt wasserlöslich ist; und Ethylenoxid/Propylenoxid-Blockcopolymeraddukte an mono- oder bifunktionelle Amine oder Alkohole, wobei der endständige Block aus Ethylenoxideinheiten besteht.

Die Komponenten (D1) und (C) unterscheiden sich in ihrem chemischen Aufbau. So basiert Komponente (D1) auf Ethylenoxid Polyethern oder Ethylenoxid(EO)/Propylenoxid(PO)-Copolymerisaten mit endständigen Etylenoxideinheiten und Komponente (C) auf PO Polyethern oder EO/PO-Copolymerisaten mit endständigen Propylenoxideinheiten. Darüber hinaus kann Komponente (C) wasserunlösliche EO Addukte aufweisen. Dementsprechend zeichnet sich Komponente (D1) durch ihre Wasserlöslichkeit aus, während Komponente (C) durch ihre Wasserunlöslichkeit und/oder Endgruppenhydrophobisierung (gegenüber EO) charakterisiert ist.

Komponente (D1) ist somit wasserlöslich, während Komponente (C) wasserlöslich oder wasserunlöslich sein kann. Im Allgemeinen können Stoffe mit einem HLB-Wert von > 10 als wasserlöslich und mit einem HLB-Wert von < 10 als wasserunlöslich angesehen werden.

Der HLB-Wert ergibt sich dabei als Quotient aus Menge an Ethylenoxid zu Gesamtmenge x 20. Allgemein ist der HLB-Wert definiert durch die Formel

$$\text{HLB} = 20\left(1 - \frac{M_L}{M_G}\right),$$

wobei $M_L$ das Molekulargewicht der lipophilen Anteile und $M_G$ das Gesamtgewicht angibt. Nähere Einzelheiten hierzu finden sich in H.-D. Dörfer, Grenzflächen und kolloiddisperse Systeme, Springer Verlag 2002, Kapitel 9.3 "Physikalische Eigenschaften und Wirkungen der Tenside".

Die Komponente (D1) enthält mindestens ein nichtionisches wasserlösliches oberflächenaktives Additiv ausgewählt aus der Gruppe bestehend aus Ethylenoxidhomopolymeren; Ethylenoxid/Propylenoxid-Blockcopolymeren, wobei die endständigen Blöcke aus Ethylenoxideinheiten bestehen; Ethylenoxidaddukte an mono- oder bifunktionelle Amine oder Alkohole, wobei die Länge der Ethylenoxidkette derart gewählt ist, dass das Addukt wasserlöslich ist; und Ethylenoxid/Propylenoxid-Blockcopolymeraddukte an mono- oder bifunktionelle Amine oder Alkohole, wobei der endständige Block aus Ethylenoxideinheiten besteht.

Bevorzugt enthält die Komponente (D1) mindestens eines der Additive ausgewählt aus der Gruppe bestehend aus Ethylenoxid/Propylenoxid-Blockcopolymeren, wobei die endständigen Blöcke aus Ethylenoxideinheiten bestehen; Ethylenoxidaddukte an bifunktionelle Amine, wobei die Länge der Ethylenoxidkette derart gewählt ist, dass das Addukt wasserlöslich ist; Ethylenoxid/Propylenoxid-Blockcopolymeraddukte an bifunktionelle Amine, wobei der endständige Block aus Ethylenoxideinheiten besteht; Ethylenoxidaddukte an monofunktionelle Alkohole, wobei die Länge der Ethylenoxidkette derart gewählt ist, dass das Addukt wasserlöslich ist; und Ethylenoxid/Propylenoxid-Blockcopolymeraddukte an monofunktionelle Alkohole, wobei der endständige Block aus Ethylenoxideinheiten besteht.

Sofern die Komponente (D1) ein Ethylenoxidhomopolymer enthält, weist dieses vorzugsweise ein Molekulargewicht von 400 g/mol bis 10000 g/mol auf.

Sofern die Komponente (D1) ein Ethylenoxid (EO)/Propylenoxidblock (PO)-copolymer mit endständigen Blöcken aus Ethylenoxideinheiten enthält, ist bevorzugt, dass diese Blöcke die Abfolge EO-PO-EO oder EO-PO-EO-PO-EO, mehr bevorzugt EO-PO-EO, aufweisen. Vorzugsweise liegt das Molekulargewicht eines solchen Copolymers im Bereich von 1000 g/mol bis 20000 g/mol. Der molare Anteil an Ethylenoxideinheiten in Bezug auf die Gesamtmenge der Copolymers liegt vorzugsweise bei mindestens 30 mol.%, mehr bevorzugt im Bereich von 40 mol-% bis 60 mol-%.

Sofern die Komponente (D1) ein Ethylenoxidaddukt an mono- oder bifunktionelle Amine oder Alkohole mit einer Länge der Ethylenoxidkette, die derart gewählt ist, dass das Addukt wasserlöslich ist, enthält, ist bevorzugt, dass dieses Addukt eine Anzahl von Ethylenoxideinheiten aufweist, die im Bereich von 10 Einheiten bis 100 Einheiten liegt. Bei dem monofunktionellen Alkohol bzw. monofunktionellen Amin handelt es sich vorzugsweise um ein verzweigtes oder unverzweigtes Alkanol bzw. Amin mit 10 bis 20 Kohlenstoffatomen, wobei das Alkanol bzw. Amin vorzugsweise ein primärer Alkohol bzw. primäres Amin ist. Bei dem bifunktionellen Alkohol handelt es sich vorzugsweise um Glykol, Propan-1,2-diol oder Propan-1,3-diol. Bei dem bifunktionellen Amin handelt es sich vorzugsweise um Ethylendiamin, Propylen-1,3-diamin, oder Butylen-1,4-diamin. Bei den Addukten mit bifunktionellen Aminen oder Alkoholen beträgt das Molekulargewicht des Adduktes vorzugsweise 1000 g/mol bis 40000 g/mol.

Sofern die Komponente (D1) ein Ethylenoxid/Propylenoxid-Blockcopolymeraddukt an mono- oder bifunktionelle Amine oder Alkohole mit endständigem Block aus Ethylenoxideinheiten enthält, weist dieses vorzugsweise nur einen Propylen- und einen Ethylenoxidblock auf. Die Anzahl der Ethylenoxideinheiten beträgt vorzugsweise 10 bis 1000 Einheiten, weiter bevorzugt 10 bis 750 Einheiten. Die Anzahl der Propylenoxideinheiten beträgt vorzugsweise 1 bis 250 Einheiten, mehr bevorzugt 10 bis 200 Einheiten. Es können auch nur geringe Anteile an Propylenoxideinheiten auftreten, beispielsweise 1 bis 10 Einheiten, bevorzugt 1 bis 3 Einheiten und insbesondere 1 Propylenoxideinheit. Bei dem monofunktionellen Alkohol bzw. monofunktionellen Amin handelt es sich vorzugsweise um ein verzweigtes oder unverzweigtes Alkanol bzw. Amin mit 10 bis 20 Kohlenstoffatomen, wobei das Alkanol bzw. Amin vorzugsweise ein primärer Alkohol bzw. primäres Amin ist. Bei dem bifunktionellen Alkohol handelt es sich vorzugsweise um Glykol, Propan-1,2-diol oder Propan-1,3-diol. Bei dem bifunktionellen Amin handelt es sich vorzugsweise um Ethylendiamin, Propylen-1,3-diamin, oder Butylen-1,4-diamin. Bei den Addukten mit bifunktionellen Aminen oder Alkoholen beträgt das Molekulargewicht des Adduktes vorzugsweise 1000 g/mol bis 40000 g/mol.

Alternativ oder zusätzlich zu (D1) kann die Komponente (D) andere Stoffe aufweisen.

Hierbei kann es sich beispielsweise um Oxidationsschutzmittel handeln.

Als Beispiele für geeignete Oxidationsschutzmittel seien die bekannten Klassen der sterisch gehinderten Phenole, der aromatischen Amine, der Thiosynergisten, der Phosphite und Phosphonite und der sterisch gehinderten Amine genannt.

Die Oxidationsschutzmittel auf Basis sterisch gehinderter Phenole enthalten als wesentlichen Baustein ein durch mindestens eine tert.-Butylgruppe in ortho-Position, insbesondere durch tert.-Butylgruppen in beiden ortho-Positionen, zur OH-Gruppe substituiertes Phenol. Die meisten bekannten Produkte enthalten mehrere dieser Bausteine, die über verschiedene Brückenglieder miteinander verbunden sind.

Bei den Oxidationsschutzmitteln auf Basis aromatischer Amine handelt es sich hauptsächlich um Diarylamine, Amin/Keton-Kondensationsprodukte, z.B. Anilin/Aceton-Kondensate und substituierte p-Phenylendiamine.

Beispiele für Thiosynergisten sind die Metallsalze von Dialkyldithiocarbaminsäuren, Zinkdialkyldithiophosphate und Ester (insbesondere Dilauryl-, Dimyristyl- und Distearylester) von Thiodipropionsäure.

Bei den Oxidationsschutzmitteln auf Basis von Phosphiten und Phosphoniten handelt es sich üblicherweise um die Ester der entsprechenden Phosphorsäuren mit alkylsubstituierten, insbesondere tert.-butylsubstituierten, Phenolen.

Die Oxidationsschutzmittel auf Basis von sterisch gehinderten Aminen (HALS) enthalten als wesentlichen Baustein ein 2,6-dialkylsubstituiertes, insbesondere ein -dimethylsubstituiertes, Piperidin, das in 4-Position über die verschiedensten Brückenglieder mit weiteren Piperidinbausteinen verknüpft ist.

Oxidationsschutzmittel sind allgemein bekannt und z.B. unter den Namen Irganox®, Irgaphos®, Chimassorb® und Irgastab® (Ciba), Topanol® (ICI), Hostanox® (Clariant) und Goodrite® (Goodyear) erhältlich.

Wenn die erfindungsgemäße Zubereitung ein Oxidationsschutzmittel enthält, liegt sein Gehalt in der Regel bei 0,1 bis 5 Gew.-%, insbesondere bei 0,1 bis 2 Gew.-% bezogen auf das Gesamtgewicht der Zubereitung.

Zusätzlich können noch geringe Mengen an Entschäumern (vorzugsweise 0,01 bis 0,2 Gew.-% bezogen auf das Gesamtgewicht der Zubereitung beispielsweise der Firmen Tego, Byk, Borchers) und Bioziden (beispielsweise 0,01 bis 0,5 Gew.-% bezogen auf das Gesamtgewicht der Zubereitung beispielsweise der Firmen Thor, Rohm & Haas) in der Zubereitung enthalten sein. Weiterhin können noch Verdicker (vorzugsweise 0,01 Gew.-% bis 2 Gew.-%, sofern vorhanden, bezogen auf das Gesamtgewicht der Zubereitung) beispielsweise der Firmen Coatex, BASF, Tego, Aqualon) eingesetzt werden.

Als weiteren Bestandteil der Komponente (D) seien beispielhaft anionische Dispergiermittel zu nennen, wie sie beispielsweise in WO-A 04/046251 beschrieben sind oder Dispergiermittel auf Polyurethanbasis, wie sie in WO-A 06/084861 beschrieben sind.

Die erfindungsgemäße Zubereitung kann vorteilhaft nach dem ebenfalls erfindungsgemäßen Herstellungsverfahren erhalten werden, indem man die Komponente (A) zunächst in wässriger, zumindest einen Teil des Additivs (B) und gegebenenfalls (D) enthaltender Suspension entweder in Gegenwart des Additivs (C) einer Nasszerkleinerung unterwirft oder das Additiv (C) und gegebenenfalls (D) anschließend zugibt und die Suspension dann, gegebenenfalls nach Zugabe der restlichen Menge Additiv (B) und gegebenenfalls (D), trocknet.

Die Komponente (A) kann bei dem erfindungsgemäßen Verfahren als trockenes Pulver oder in Form eines Presskuchens eingesetzt werden.

Bei der eingesetzten Komponente (A) handelt es sich vorzugsweise um ein gefinishtes Produkt, d.h. die Primärkorngröße des Pigments ist bereits auf den für die Anwendung gewünschten Wert eingestellt. Dieses Pigmentfinish empfiehlt sich insbesondere bei organischen Pigmenten, da die bei der Pigmentsynthese anfallende Rohware in der Regel nicht direkt für die Anwendung geeignet ist. Bei anorganischen Pigmenten, z.B. bei Oxid- und Bismutvanadatpigmenten, kann die Einstellung der Primärkorngröße auch bei der Pigmentsynthese erfolgen, so dass die anfallenden Pigmentsuspensionen direkt beim erfindungsgemäßen Verfahren eingesetzt werden können.

Da das gefinishte Pigment (A) bei der Trocknung bzw. auf dem Filteraggregat üblicherweise wieder reagglomeriert, wird es in wässriger Suspension einer Nasszerkleinerung, z.B. einer Mahlung in einer Rührwerkskugelmühle, unterzogen.

Bei der Nasszerkleinerung sollte zumindest ein Teil des in der fertigen Pigmentzubereitung enthaltenen Additivs (B) anwesend sein, vorzugsweise setzt man die gesamte Menge Additiv (B) vor der Nasszerkleinerung zu.

Das Additiv (C) kann vor, während oder nach der Nasszerkleinerung zugesetzt werden.

Das Additiv (D) kann mit (B) oder (C) zugegeben werden.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann die Teilchengröße der erfindungsgemäßen Pigmentzubereitungen gezielt gesteuert werden.

Bei Sprüh- und Wirbelschichtgranulierung können grobteilige Granulate mit mittleren Korngrößen von 50 bis 5000 $\mu$m, insbesondere 100 bis 1000 $\mu$m, erhalten werden. Durch Sprühtrocknung werden üblicherweise Granulate mit mittleren Korngrößen < 20 $\mu$m erhalten. Feinteilige Zubereitungen können bei der Trocknung im Schaufeltrockner und beim Eindampfen mit anschließender Mahlung erhalten werden. Vorzugsweise liegen die erfindungsgemäßen Pigmentzubereitungen jedoch in Granulatform vor.

Die Sprühgranulierung führt man vorzugsweise in einem Sprühturm mit Einstoffdüse durch. Die Suspension

wird hier in Form größerer Tropfen versprüht, wobei das Wasser verdampft. Die Additive (D1) - sofern vorhanden - und (C) schmelzen bei den Trocknungstemperaturen auf und führen so zur Bildung eines weitgehend kugelförmigen Granulats mit besonders glatter Oberfläche (BET-Werte von in der Regel ≤ 15 $m^2$/g, insbesondere ≤ 10 $m^2$/g).

In einem bevorzugten Verfahren der Sprühgranulierung zum erhalt einer erfindungsgemäßen festen Pigmentzubereitung werden folgende Schritte durchgeführt:

(a) Zerstäuben einer Suspension vorzugsweise enthaltend
eine Lösemittelkomponente;
die Pigmentkomponente (A), ohne zumindest einem Anteil an einzusetzendem Füllstoff;
die Komponenten (C) und (D),
wobei die Summe der Gewichtsanteile aller Komponenten, bezogen beziehungsweise umgerechnet auf das Gesamtgewicht, 100 Gew.-% ergibt,
in einer Zerstäubungsvorrichtung;

(b) Inkontaktbringen der in Schritt (a) entstandenen Tröpfchen mit einem eine vorgegebene Temperatur aufweisenden Gasstromes zu deren Trocknung unter Erhalt eines Granulates mit einem vorgegebenen Restfeuchtegehalt und

(c) Trennen des Granulates von dem Gasstrom,

wobei in Schritt (b) vor Erreichen des Restfeuchtegehaltes die Tröpfchen einem Aerosol, enthaltend den Restanteil an Füllstoff zumindest teilweise ausgesetzt werden.

Es ist bevorzugt, dass die erfindungsgemäße Zubereitung in Form von Granulaten mit einer mittleren Korngröße von 50 bis 5000 μm und einer BET-Oberfläche von ≤ 15 $m^2$/g vorliegt.

Die Gaseintrittstemperatur im Sprühturm liegt im Allgemeinen bei 180 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Pigmentgranulats liegt in der Regel bei < 2 Gew.-%.

Die erfindungsgemäßen Pigmentzubereitungen zeichnen sich bei der Anwendung durch ihre hervorragenden, den flüssigen Pigmentpräparationen vergleichbaren, koloristischen Eigenschaften, insbesondere ihre Farbstärke und Brillanz, ihren Farbton und ihr Deckvermögen, und vor allem durch ihr Stir-in-Verhalten aus, d.h. sie können mit sehr geringem Energieeintrag durch einfaches Einrühren oder Schütteln in den Anwendungsmedien verteilt werden. Dies gilt insbesondere für die grobteiligen Pigmentgranulate, die die bevorzugte Ausführungsform der erfindungsgemäßen Pigmentzubereitungen darstellen.

Im Vergleich zu flüssigen Pigmentpräparationen weisen die erfindungsgemäßen Pigmentzubereitungen zudem folgende Vorteile auf: Sie haben einen höheren Pigmentgehalt. Während flüssige Präparationen bei der Lagerung zu Viskositätsänderungen neigen und mit Konservierungsmitteln und Mitteln zur Erhöhung der Gefrier- und/oder Eintrocknungsbeständigkeit versetzt werden müssen, zeigen die erfindungsgemäßen Pigmentzubereitungen sehr gute Lagerstabilität. Sie sind hinsichtlich Verpackung, Lagerung und Transport wirtschaftlich und ökologisch vorteilhaft. Da sie lösungsmittelfrei sind, weisen sie höhere Flexibilität in der Anwendung auf.

Die erfindungsgemäßen Pigmentzubereitungen in Granulatform zeichnen sich durch ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation aus.

Die erfindungsgemäßen Pigmentzubereitungen eignen sich hervorragend zur Einfärbung von hochmolekularen organischen und anorganischen Materialien jeglicher Art. Flüssige Anwendungsmedien können dabei auch rein wässrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren.

Als Beispiele für Materialien, die mit den efindungsgemäßen Pigmentzubereitungen eingefärbt werden können, seien genannt: Lacke, z.B. Bautenlacke, Industrielacke, Fahrzeuglacke, strahlungshärtbare Lacke; Anstrichmittel, sowohl für den Bautenaußenals auch -innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentzubereitung Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergentien.

Besonders vorteilhaft können die erfindungsgemäßen Pigmentzubereitungen als Mischkomponenten in Farbmisch- oder Abtönsystemen eingesetzt werden. Aufgrund ihres Stir-in-Verhaltens können sie dabei direkt als Feststoff

zum Einsatz kommen. Gewünschtenfalls können sie jedoch auch zunächst in Basisfarben, Mischlacken und Abtönfarben (insbesondere Farben mit hohem Feststoffgehalt, "HS-Farben") oder noch höher pigmentierte Abtönpasten überführt werden, die dann die Komponenten des Mischsystems darstellen. Die Einstellung des gewünschten Farbtons und damit die Mischung der Farbkomponenten kann visuell über ein System von Farbkarten in möglichst vielen Farbtonabstufungen, die auf Farbstandards, wie RAL, BS und NCS, basieren, erfolgen oder bevorzugt computergesteuert vorgenommen werden, wodurch eine unbegrenzte Anzahl von Farbtönen zugänglich ist ("computer color matching").

**Beispiele**

Beispiel 1

Eine erfindungsgemäße feste Pigmentzubereitung wurde nach herkömmlichen Verfahren hergestellt und enthält folgende Bestandteile jeweils bezogen auf das Gesamtgewicht der Zubereitung:

| Stoff | Gewichtsanteil in % | | | | | | | |
|---|---|---|---|---|---|---|---|---|
| | B1 | B2 | B3 | B4 | B5 | B6 | B7 | B8 |
| Komponente (A) | | | | | | | | |
| Pigment P.Y. 74 | 72 | 72 | | | | | | |
| Pgt. P.Y. 42 | | | 74 | 76 | | | | |
| Pgt. P.R. 101 (Sicotrans Rot 2915) | | | | | 78 | | | |
| Pgt. P.Y. 184 | | | | | | 80 | | |
| Pgt. P.O. 67 | | | | | | | 72 | |
| Pgt. P.R. 254 | | | | | | | | 80 |
| Pigment-Synergist*) | 3 | 3 | | | | | 3 | |
| Komponente (B) | | | | | | | | |
| Alkylalkylenoxidphosphatester*) | 20 | 15 | 5 | 5 | 12,5 | 5 | 15 | 15 |
| Komponente (C) | | | | | | | | |
| PO-EO-PO*) | 5 | 10 | 10 | 7,5 | 7,5 | 5 | 10 | 5 |
| Komponente (D) | | | | | | | | |
| EO-PO-EO (D1) mit 40% EO*) | | | 10 | 7,5 | | 5 | | |
| Oxidationsstabilisator*) | | | 1 | 1 | 1 | 1 | | |
| Surfynol 104, Fa. Airproducts | | | | 3 | 1 | | | |
| Modifiziertes Polymer*) | | | | | | 4 | | |
| Summe | 100 | 100 | 100 | 100 | 100 | 100 | 100 | 100 |
| *) B: Saurer Phosphorsäureester auf Basis von alkylenoxyliertem C13-C15-Oxoalkohol (12 mol EO, 6 mol PO/mol Alkohol),<br>C: Propylenoxid-/Ethylenoxid-/Propylenoxid Copolymer mit zentralem Ethylenoxidblock, 40% EO, MG 2500 g/mol.<br>D 1: Propylenoxid/Ethylenoxid-Copolymer mit zentralem Polypropylenoxidblock, einem Ethylenoxidgehalt von 50 Gew.-% und einem mittleren Molekulargewicht $M_n$ von 6500 g/mol. | | | | | | | | |

Surfynol® 104. Fa. Airproducts, Hydroxylgruppenhaltiges Acetylen

Pigmentsynergist:: Chinophthalonsulfonsäure (WO-A-02/00643, Beispiel 1)

Polymer: Wässrige Lösung eines Copolymerisats aus 40 mol-% Isobuten, 47 mol% Maleinsäure und 13 mol% $C_{18}$-Olefin (Feststoffgehalt: 25%; pH-Wert: 8; $M_w$: 10 000 g/mol).

Folgende Farben werden geprüft:

1. Wasserbasierende Dispersionsfarbe auf Basis Styrol/Acrylatbasis mit einem Weißpigmentgehalt von 16,4 Gew.-% ($TiO_2$, Kronos 2043) (Prüfbinder 00-1067, BASF).

2. Alkyd-Melamin-Einbrennlack (56% Gew.% Feststoffanteil, Xylol/Butanol als Lösemittel) Weißaufhellung mit Weißpigmentgehalt von 27,0 Gew.-% ($TiO_2$, Kronos 2059) 40% Bindemittel (Prüfbinder EL 2, BASF).

3. Alkyd-Melamin-Einbrennlack (35 Gew.% Feststoffanteil, Xylol als Lösemittel), Weißaufhellung mit Weißpigmentgehalt von 20,0 Gew.-% ($TiO_2$, Kronos 2059) (Prüfbinder EPL, BASF)

4. Lufttrocknender Alkydlack (45 Gew.% Feststoffanteil, Xylol als Lösemittel, BASF-Prüflack AF 485). Weißaufhellung mit Weißpigmentgehalt von 25,6 % TiO2 Kronos 2059,

5. Acrylat-Isocyanat-Lack (2K) (40. Gew.% Feststoffanteil mit Xylol / Methoxypropylacetat als Lösemittel. Weißaufhellung mit 21% TiO2-Gehalt.

6. Aromatenarmer lufttrocknender Hochglanzweißalkydlylack (60-69 Gew.% Feststoffanteil, aliphatische Lösemittel.

Prüfung:

In einem 150 ml-Kunststoffbecher werden eine Mischung von 2 g Stir-in Pigment und 50 g Farbe (Buntlack für Purtonbeurteilung bzw. Weißlack zur Farbstärkebeurteilung) mit einem Schnellrührer 5 min bei 1500 U/min homogenisiert. Die erhaltene Farbe wird dann mit einer 150 μm-Spirairakel auf schwarz/weißen Prüfkarton aufgezogen und 30 min getrocknet. Die Einbrennlacke (EPL, EL2) werden zusätzlich 30 min bei 130°C im Trockenschrank eingebrannt

Geprüft werden die Farbstärke in der Weißaufhellung (Angabe der Färbeäquivalente FAE, DIN 55986), die Koloristik im Vollton und die Zahl der Stippen in den verschiedenen Lacken.

Die erfindungsgemäßen Stir-in Pigmentpräparationen sind ohne Rub-out und stippenfrei in den einzelnen Farben dispergierbar. Die Farbstärke ist vergleichbar mit den entsprechenden wässrigen bzw. lösemittelhaltigen Pasten. Somit sind diese universell für wässrige und organische Systeme einsetzbar.

## Patentansprüche

**1.** Feste Pigmentzubereitung enthaltend jeweils bezogen auf das Gesamtgewicht der Zubereitung

(A) mindestens 60 Gew.% einer Pigmentkomponente enthaltend mindestens ein Pigment und/oder einen Füllstoff,
(B) 1 Gew.-% bis 29 Gew.-% einer oberflächenaktiven Additivkomponente auf Basis zumindest eines Phosphorsäure- oder Phosphonsäureesters, der sowohl anionisch als auch nichtionisch sein kann;
(C) 1 Gew.-% bis 29 Gew.% mindestens eines nichtionischen oberflächenaktiven Additivs auf der Basis von Polyethern ausgewählt aus der Gruppe bestehend aus Propylenoxidhomopolymeren; Ethylenoxid/Propylenoxid-Blockcopolymeren, wobei die endständigen Blöcke aus Propylenoxideinheiten bestehen; Ethylenoxidaddukte an mono- oder bifunktionelle Amine oder Alkohole, wobei die Länge der Ethylenoxidkette derart gewählt ist, dass das Addukt wasserunlöslich ist; und Ethylenoxid/Propylenoxid-Blockcopolymeraddukte an mono- oder bifunktionelle Amine oder Alkohole, wobei der endständige Block aus Propylenoxideinheiten besteht;
(D1) 1 Gew.-% bis 20 Gew.-% bezogen auf das Gesamtgewicht der Zubereitung mindestens eines nichtionischen wasserlöslichen oberflächenaktiven Additivs auf der Basis von Polyethem ausgewählt aus der Gruppe bestehend aus Ethylenoxidhomopolymeren; Ethylenoxid/Propylenoxid-Blockcopolymeren, wobei die endständigen Blöcke aus Ethylenoxideinheiten bestehen; Ethylenoxidaddukte an mono- oder bifunktionelle Amine oder Alkohole, wobei die Länge der Ethylenoxidkette derart gewählt ist, dass das Addukt wasserlöslich ist; und Ethylenoxid/Propylenoxid-Blockcopolymeraddukte an mono- oder bifunktionelle Amine oder Alkohole, wobei der endständige Block aus Ethylenoxideinheiten besteht, enthält.

wobei die Summe der Gewichtsanteile 100 Gew.-% nicht überschreitet.

**2.** Zubereitung nach Anspruch 1, **dadurch gekennzeichnet, dass** die Komponente (D1) mindestens eines der Additive enthält, welches ausgewählt ist aus der Gruppe bestehend aus Ethylenoxid/Propylenoxid-Blockcopolymeren, wobei die endständigen Blöcke aus Ethylenoxideinheiten bestehen; Ethylenoxidaddukte an bifunktionelle Amine, wobei

die Länge der Ethylenoxidkette derart gewählt ist, dass das Addukt wasserlöslich ist; Ethylenoxid/Propylenoxid-Blockcopolymeraddukte an bifunktionelle Amine, wobei der endständige Block aus Ethylenoxideinheiten besteht; Ethylenoxidaddukte an monofunktionelle Alkohole, wobei die Länge der Ethylenoxidkette derart gewählt ist, dass das Addukt wasserlöslich ist; und Ethylenoxid/Propylenoxid-Blockcopolymeraddukte an monofunktionelle Alkohole, wobei der endständige Block aus Ethylenoxideinheiten besteht.

3. Zubereitung nach einem der Anspruch 1 oder 2, **dadurch gekennzeichnet, dass** Komponente (A) mindestens ein Pigment und gegebenenfalls mindestens einen Pigmentsynergisten enthält.

4. Zubereitung nach einem der Ansprüche 1 bis 3, **dadurch gekennzeichnet, dass** Komponente (A) mindestens einen Füllstoff enthält.

5. Zubereitung nach einem der Ansprüche 1 bis 4, **dadurch gekennzeichnet, dass** die Summe der Gewichtsanteile der Komponenten (B) und (C) bezogen auf das Gesamtgewicht der Zubereitung 10 Gew.-% bis 30 Gew.-% beträgt.

6. Zubereitung nach einem der Ansprüche 1 bis 5, **dadurch gekennzeichnet, dass** die Komponente (C) mindestens eines der Additive enthält, welches ausgewählt ist aus der Gruppe bestehend aus Ethylenoxid/Propylenoxid-Blockcopolymeren, wobei die endständigen Blöcke aus Propylenoxideinheiten bestehen; Ethylenoxid/Propylenoxid-Blockcopolymeraddukte an bifunktionelle Amine, wobei der endständige Block aus Propylenoxideinheiten besteht;

7. Zubereitung nach einem der Ansprüche 1 bis 6, **dadurch gekennzeichnet, dass** diese in Form von Granulaten mit einer mittleren Korngröße von 50 bis 5000 μm und einer BET-Oberfläche von ≤ 15 $m^2/g$ vorliegt.

8. Verfahren zur Herstellung einer Zubereitung nach einem der Ansprüche 1 bis 7. **dadurch gekennzeichnet, dass** zunächst die Komponente (A) in wässriger, zumindest einen Teil des Additivs (B) und (D1) enthaltender Suspension entweder in Gegenwart des Additivs (C) einer Nasszerkleinerung unterwirft oder das Additiv (C) und (D1) anschließend zugibt und die Suspension dann, gegebenenfalls nach Zugabe der restlichen Menge an Additiv (B) und (D1), trocknet.

9. Verfahren zur Einfärbung von hochmolekularen organischen und anorganischen Materialen, **dadurch gekennzeichnet, dass** die Zubereitung nach einem der Ansprüche 1 bis 7 durch Einrühren oder Schütteln in diese Materialien eingetragen wird.

10. Verfahren nach Anspruch 9, **dadurch gekennzeichnet, dass** die Materialien Lacke, Anstrichmittel, Druckfarben, Tinten oder Beschichtungssysteme sind, die als flüssige Phase Wasser, organische Lösungsmittel oder Mischungen von Wasser und organischen Lösungsmitteln enthalten.

11. Verfahren zur Einfärbung von hochmolekularen organischen und anorganischen Materialien unter Verwendung von Farbmischsystemen, **dadurch gekennzeichnet, dass** eine Zubereitung nach einem der Ansprüche 1 bis 7 als Mischkomponenten eingesetzt wird.

## Claims

1. A solid pigment preparation comprising, all based on the total weight of the preparation,

   (A) at least 60% by weight of a pigment component comprising at least one pigment and/or a filler,
   (B) 1% by weight to 29% by weight of a surface-active additive component based on at least a phosphoric or phosphonic ester, which may be anionic or nonionic;
   (C) 1% by weight to 29% by weight of at least one nonionic surface-active additive based on polyethers selected from the group consisting of propylene oxide homopolymers; ethylene oxide-propylene oxide block copolymers wherein the terminal blocks consist of propylene oxide units; ethylene oxide adducts onto mono- or bifunctional amines or alcohols wherein the length of the ethylene oxide chain is chosen such that the adduct is water-insoluble; and ethylene oxide-propylene oxide block copolymer adducts onto mono- or bifunctional amines or alcohols wherein the terminal block consists of propylene oxide units;
   (D1) 1% by weight to 20% by weight, based on the total weight of the preparation, of at least one nonionic water-soluble surface-active additive based on polyethers selected from the group consisting of ethylene oxide homopolymers; ethylene oxide-propylene oxide block copolymers wherein the terminal blocks consist of ethylene

oxide units; ethylene oxide adducts onto mono- or bifunctional amines or alcohols wherein the length of the ethylene oxide chain is chosen such that the adduct is water-soluble; and ethylene oxide-propylene oxide block copolymer adducts onto mono- or bifunctional amines or alcohols wherein the terminal block consists of ethylene oxide units,

wherein the sum total of the weight percentages does not exceed 100% by weight.

**2.** The preparation according to claim 1 wherein said component (D1) comprises at least one of the additives which is selected from the group consisting of ethylene oxide-propylene oxide block copolymers wherein the terminal blocks consist of ethylene oxide units; ethylene oxide adducts onto bifunctional amines wherein the length of the ethylene oxide chain is chosen such that the adduct is water-soluble; ethylene oxide-propylene oxide block copolymer adducts onto bifunctional amines wherein the terminal block consists of ethylene oxide units; ethylene oxide adducts onto monofunctional alcohols wherein the length of the ethylene oxide chain is chosen such that the adduct is water-soluble; and ethylene oxide-propylene oxide block copolymer adducts onto monofunctional alcohols wherein the terminal block consists of ethylene oxide units.

**3.** The preparation according to either of claims 1 and 2 wherein component (A) comprises at least one pigment with or without at least one pigment synergist.

**4.** The preparation according to any one of claims 1 to 3 wherein component (A) comprises at least one filler.

**5.** The preparation according to any one of claims 1 to 4 wherein the sum total of the weight percentages of said components (B) and (C) is in the range from 10% by weight to 30% by weight based on the total weight of the preparation.

**6.** The preparation according to any one of claims 1 to 5 wherein said component (C) comprises at least one of the additives which is selected from the group consisting of ethylene oxide-propylene oxide block copolymers wherein the terminal blocks consist of propylene oxide units; ethylene oxide-propylene oxide block copolymer adducts onto bifunctional amines wherein the terminal block consists of propylene oxide units;

**7.** The preparation according to any one of claims 1 to 6 in the form of granules having an average particle size in the range from 50 to 5000 $\mu$m and a BET surface area of □ 15 m/g.

**8.** A process for producing a preparation according to any one of claims 1 to 7, which comprises wet-comminuting the component (A) in aqueous suspension comprising some or all of the additive (B) and (D1) either in the presence of the additive (C) or subsequently adding the additive (C) and (D1) and then drying the suspension, after if appropriate addition of the remaining amount of additive (B) and (D1).

**9.** A process for coloring macromolecular organic and inorganic materials, which comprises incorporating the preparation according to any one of claims 1 to 7 into these materials by stirring or shaking.

**10.** The process according to claim 9 wherein the materials are varnishes, paints, printing inks, liquid inks or coating systems comprising water, organic solvents, or mixtures of water and organic solvents as liquid phase.

**11.** A process for coloring macromolecular organic and inorganic materials by using color-mixing systems, which comprises using a preparation according to any one of claims 1 to 7 as mixing components.

## Revendications

**1.** Préparation de pigment solide contenant chaque fois par rapport au poids total de la préparation

(A) au moins 60 % en poids d'un composant pigmentaire contenant au moins un pigment et/ou une charge,
(B) 1 % en poids à 29 % en poids d'un composant additif tensioactif à base d'au moins un ester d'acide phosphorique ou d'acide phosphonique, qui peut être aussi bien anionique que non ionique ;
(C) 1 % en poids à 29 % en poids d'au moins un additif tensioactif non ionique à base de polyéthers, choisi dans le groupe constitué par des homopolymères d'oxyde de propylène ; des copolymères séquencés oxyde d'éthylène/oxyde de propylène, les séquences en bout de chaîne étant constituées de motifs oxyde de

propylène ; des adduits d'oxyde d'éthylène sur des amines mono- ou bifonctionnelles ou des alcools mono- ou bifonctionnels, la longueur de la chaîne oxyde d'éthylène étant choisie de manière que l'adduit soit insoluble dans l'eau ; et des adduits de copolymères séquencés oxyde d'éthylène/oxyde de propylène sur des amines mono- ou bifonctionnelles ou des alcools mono- ou bifonctionnels, la séquence en bout de chaîne étant constituée de motifs oxyde de propylène ;

Dl) 1 % en poids à 20 % en poids, par rapport au poids total de la préparation, d'au moins un additif tensioactif non ionique hydrosoluble à base de polyéthers, choisi dans le groupe constitué par des homopolymères d'oxyde d'éthylène ; des copolymères séquencés oxyde d'éthylène/oxyde de propylène, les séquences en bout de chaîne étant constituées de motifs oxyde d'éthylène ; des adduits d'oxyde d'éthylène sur des amines mono- ou bifonctionnelles ou des alcools mono- ou bifonctionnels, la longueur de la chaîne oxyde d'éthylène étant choisie de manière que l'adduit soit soluble dans l'eau ; et des adduits de copolymères séquencés oxyde d'éthylène/oxyde de propylène sur des amines mono- ou bifonctionnelles ou des alcools mono- ou bifonctionnels, la séquence en bout de chaîne étant constituée de motifs oxyde d'éthylène ;

la somme des proportions en poids n'excédant pas 100 % en poids.

2. Préparation selon la revendication 1, **caractérisée en ce que** le composant (D1) contient au moins un des additifs, qui est choisi dans le groupe constitué par des copolymères séquencés oxyde d'éthylène/oxyde de propylène, les séquences en bout de chaîne étant constituées de motifs oxyde d'éthylène ; des adduits d'oxyde d'éthylène sur des amines bifonctionnelles, la longueur de la chaîne oxyde d'éthylène étant choisie de manière que l'adduit soit soluble dans l'eau ; des adduits de copolymères séquencés oxyde d'éthylène/oxyde de propylène sur des amines bifonctionnelles, la séquence en bout de chaîne étant constituée de motifs oxyde d'éthylène ; des adduits d'oxyde d'éthylène sur des alcools monofonctionnels, la longueur de la chaîne oxyde d'éthylène étant choisie de manière que l'adduit soit soluble dans l'eau ; et des adduits de copolymères séquencés oxyde d'éthylène/oxyde de propylène sur des alcools monofonctionnels, la séquence en bout de chaîne étant constituée de motifs oxyde d'éthylène.

3. Préparation selon l'une quelconque des revendications 1 et 2, **caractérisée en ce que** le composant (A) contient au moins un pigment et éventuellement au moins un agent synergique pigmentaire.

4. Préparation selon l'une quelconque des revendications 1 à 3, **caractérisée en ce que** le composant (A) contient au moins une charge.

5. Préparation selon l'une quelconque des revendications 1 à 4, **caractérisée en ce que** la somme des proportions en poids des composants (B) et (C) par rapport au poids total de la préparation vaut de 10 % en poids à 30 % en poids.

6. Préparation selon l'une quelconque des revendications 1 à 5, **caractérisée en ce que** le composant (C) contient au moins un des additifs, qui est choisi dans le groupe constitué par des copolymères séquencés oxyde d'éthylène/oxyde de propylène, les séquences en bout de chaîne étant constituées de motifs oxyde de propylène ; des adduits de copolymères séquencés oxyde d'éthylène/oxyde de propylène sur des amines bifonctionnelles, la séquence en bout de chaîne étant constituée de de motifs oxyde de propylène.

7. Préparation selon l'une quelconque des revendications 1 à 6, **caractérisée en ce qu'**elle se trouve sous forme de granulés ayant une taille moyenne de grain de 50 à 5 000 $\mu$m et une surface BET de $\leq$ 15 $m^2/g$.

8. Procédé pour la production d'une préparation selon l'une quelconque des revendications 1 à 7, **caractérisé en ce que** d'abord on soumet à une granulation par voie humide le composant (A) en suspension aqueuse, contenant au moins une partie de l'additif (B) et (DI), soit en présence de l'additif (C), soit on ajoute l'additif (C) et ensuite (DI) et on sèche ensuite la suspension, éventuellement après addition de la quantité restante d'additif (B) et (DI).

9. Procédé pour la coloration de matières inorganiques et de matières organiques de masse moléculaire élevée, **caractérisé en ce qu'**on introduit dans ces matières par délayage ou secouement la préparation selon l'une quelconque des revendications 1 à 7.

10. Procédé selon la revendication 9, **caractérisé en ce que** les matériaux sont des peintures, des enduits, des encres d'impression, des encres ou des systèmes de revêtement, qui contiennent comme phase liquide de l'eau, des solvants organiques ou des mélanges d'eau et de solvants organiques.

11. Procédé pour la coloration de matières inorganiques et organiques de masse moléculaire élevée, avec utilisation

de systèmes colorants mélangés, **caractérisé en ce qu'**on utilise comme composants de mélange une préparation selon l'une quelconque des revendications 1 à 7.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0364540 A
- WO 0366743 A
- WO 0400903 A
- WO 0429159 A
- WO 0446251 A
- WO 0450770 A
- WO 06084849 A
- WO 06084861 A
- WO 0047681 A
- WO 04046251 A
- WO 0200643 A


### In der Beschreibung aufgeführte Nicht-Patentliteratur


- Grenzflächen und kolloiddisperse Systeme. **H.-D. DÖRFER.** Physikalische Eigenschaften und Wirkungen der Tenside. Springer Verlag, 2002